# FASCICULE DE BREVET EUROPEEN

(11) **EP 4 483 177 B1**
(45) Date de publication et mention de la délivrance du brevet: **19.08.2026**
(21) Numéro de dépôt: 23706583.4
(22) Date de dépôt: 20.02.2023
(51) Int. Cl.: G01N 30/04, G01N 30/08

(54) **DISPOSITIF DE PRÉ-PURIFICATION ET D'INJECTION ET PROCÉDÉ DE PRÉ-PURIFICATION ET D'INJECTION**
VORREINIGUNGS- UND INJEKTIONSVORRICHTUNG SOWIE VORREINIGUNG UND INJEKTIONSVERFAHREN
PRE-PURIFICATION AND INJECTION DEVICE, AND PRE-PURIFICATION AND INJECTION METHOD

(30) Priorité: 24.02.2022 BE 202205131
(43) Date de publication de la demande: 01.01.2025
(73) Titulaire: Out and Out Chemistry, 5600 Neuville (BE)
(72) Inventeur: JOYARD, Yoann, 69003 Lyon (FR); MAINDRON, Nicolas, 69200 Vénissieux (FR); TADINO, Vincent, 5650 Chastrès (BE)
(74) Mandataire: Calysta NV
(86) Numéro de dépôt international: PCT/EP2023/054205
(87) Numéro de publication internationale: WO 2023/161189

(56) Documents cités:
- EP-B1- 0 642 662
- US-A- 5 651 885
- US-A1- 2007 029 241
- US-A1- 2013 240 449
- US-A1- 2017 343 519

## Description

L'invention concerne le domaine de la synthèse et la purification de composés radiomarqués tels que des traceurs radiomarqués injectables, par exemple, pour des analyses par tomographie par émission de positons (PET). En particulier, l'invention a pour objet une cartouche de pré-purification d'un échantillon liquide brut issu d'une synthèse de composés radiomarqués, en vue de son analyse/sa séparation/sa purification par chromatographie à haute pression. L'invention concerne également un dispositif et un procédé de pré-purification et d'injection d'un échantillon liquide de composés radiomarqués dans un système de chromatographie à haute pression.

La synthèse de composés radiomarqués (ou radiosynthèse) est généralement basée sur la chimie par « voie humide » où le synthon radioactif réagit, dans un module de synthèse ou radiosynthétiseur, avec un précurseur non radioactif en solution. Vu que le composé radioactif est destiné à être injecté dans l'organisme d'un patient, cette approche nécessite impérativement une étape de purification du produit de synthèse (échantillon brut comprenant le(s) composé(s) radiomarqué(s)).

Afin de purifier un échantillon brut issu d'une radiosynthèse, une méthode connue et communément utilisée est la chromatographie en phase liquide à haute performance ou à haute pression (HPLC). Cette étape de purification doit alors être suivie d'une étape de reformulation dans un solvant biocompatible, les solvants usuels en HPLC (par ex., l'acétonitrile) ne convenant pas à l'injection dans l'organisme de l'homme ou de l'animal.

Pour la purification d'un échantillon brut issu d'une synthèse de composés radiomarqués, il est également connu, mais dans une moindre mesure et essentiellement pour des composés marqués au Carbone 11 et pour de faible niveau de radioactivité, d'utiliser la chromatographie en phase supercritique (ou SFC). Cette méthode utilise un fluide supercritique comme phase mobile (communément, le dioxyde de carbone), généralement couplé à un co-solvant ou « modifiant » qui modifie sa polarité (par exemple, de l'éthanol). La SFC permet une étape de séparation plus rapide par rapport à la HPLC (au moins deux à trois fois), ce qui est un avantage significatif dans le cas d'isotopes radioactifs à courte durée de vie car cela améliore le rendement final de synthèse. De plus, la SFC permet de s'affranchir de l'étape de reformulation car l'échantillon purifié peut être récupéré dans de l'éthanol qui convient à l'injection dans l'organisme après simple dilution (par ex. avec une solution saline ou un tampon aqueux).

Dans ces deux méthodes de purification, les échantillons bruts issus de la radiosynthèse sont généralement injectés vers la colonne de chromatographie au moyen d'un système d'injection comprenant une boucle d'injection et une vanne, la boucle permettant l'injection d'un volume maximal vers la colonne égal au volume de la boucle (et la répétabilité dudit volume injecté dans le cas de l'utilisation de la totalité du volume de la boucle) tandis que la vanne permet de connecter de façon fluidique différents éléments (la «sortie» du synthétiseur, la boucle, une pompe, un récipient « déchets »,...). Un inconvénient d'une telle boucle est qu'elle génère une contrainte sur le volume envoyé qui est au maximum celui de la boucle, sauf à remplir la boucle et à injecter plusieurs fois (en automatique), mais ceci est très chronophage et est donc à éviter absolument dans le cas de radiosynthèses. De plus, dans ce cas, il existe toujours le risque de perte de rendement, par débordement par exemple.

Le document US2013/240449 A1 décrit un dispositif pour purifier un échantillon radioactif, incluant une pré-purification avant injection dans un système de séparation du type HPLC sur une colonne du type analytique et nécessitant de façon classique une boucle d'injection (108). La boucle d'injection dans ce document permet de charger la colonne HPLC et a un faible volume (1,74 ml), elle doit ainsi être remplie plusieurs fois si le volume de l'échantillon est plus élevé, ce qui engendre une perte de temps et également des pertes de rendements.

Le document US5651885 A, quant à lui, décrit une colonne biocompatible destinée à être utilisée dans des applications de chromatographie liquide, comprenant un tube interne polymère biocompatible qui est situé à l'intérieur d'un tube externe métallique.

En particulier, la méthode HPLC permet de gérer des volumes d'injection élevés (jusqu'à 10 ml par exemple) et permet ainsi une certaine rapidité car la boucle est chargée une seule fois et de limiter la perte de rendement (par perte de l'activité dans le radiosynthétiseur) car une ou plusieurs opération(s) de rinçage peu(ven)t être effectuée(s) afin de maximiser la récupération d'un échantillon brut issu d'une synthèse de composés radiomarqués. En revanche, la dilution engendrée peut réduire les performances chromatographiques et affecter la pureté du produit final.

A côté de cela, en condition classique, la méthode SFC, quant à elle, nécessite une boucle d'injection à faible volume (moins de 1 ml) car des volumes d'injection plus importants déclencheraient une décompression violente lorsque la vanne d'injection est réinitialisée en position de charge. L'utilisation de cette méthode de séparation n'est dès lors pas adaptée pour des synthèses de plus «grandes quantités», c'est-à-dire avec des volumes supérieurs à 1 ml.

Or, la configuration des radiosynthétiseurs classiques ne permet pas le transfert automatique et sans perte de radioactivité de volumes inférieurs à 1 ml. Pour des volumes d'échantillons bruts supérieurs à 1ml, afin de pouvoir utiliser la SFC et bénéficier de ses avantages précités, une (pré)concentration, par évaporation du solvant par exemple, pourrait être envisagée mais l'injection d'un faible volume dans la boucle devrait être manuelle pour limiter les pertes, ce qui est inenvisageable pour les quantités de radioactivité engagées en production. En outre, l'étape supplémentaire d'évaporation par exemple, impacterait automatiquement le rendement de synthèse dans le cas d'isotopes radioactifs à courte durée de vie.

De manière plus spécifique, il existe également des systèmes de séparation utilisant la méthode SFC (préparative industrielle) dotés d'une boucle d'injection de plus grand volume (par exemple, 5 ml) mais ces systèmes sont plus volumineux et très onéreux. Ils ont dès lors trouvé peu d'applications dans la synthèse de composés radiomarqués.

De plus, au risque de rencontrer des problèmes de bouchage de la colonne de chromatographie, il est souvent nécessaire de filtrer au préalable l'échantillon brut issu d'une radiosynthèse, ce qui constitue de nouveau une étape supplémentaire rallongeant le temps du processus complet synthèse-purification. De plus, cette étape de filtration nécessite une sélection rigoureuse du filtre afin de minimiser les pertes sur la membrane du filtre (par exemple, par interaction chimique). Un objectif de la présente invention est de pallier les inconvénients de l'état de la technique décrits ci-dessus.

En particulier, un objectif de l'invention est de fournir un dispositif et un procédé de pré-purification et d'injection d'un échantillon brut issu d'une synthèse de composés radiomarqués, vers un système de chromatographie à haute pression, qui permettent une diminution du temps pour obtenir le composé radiomarqué purifié par rapport aux systèmes de l'état de la technique et qui donnent ainsi accès à des rendements finaux plus élevés.

Un objectif de l'invention est également de fournir un dispositif et un procédé de pré-purification et d'injection d'un échantillon brut issu d'une synthèse de composés radiomarqués, vers un système de chromatographie à haute pression, quel que soit le volume initial dudit échantillon brut.

Un autre objectif de l'invention est de fournir un dispositif et un procédé de pré-purification et d'injection automatisée, sans opération manuelle, d'un échantillon brut issu d'une synthèse de composés radiomarqués vers un système de chromatographie à haute pression.

Un autre objectif de l'invention est de fournir un dispositif et un procédé de pré-purification et d'injection d'un échantillon brut issu d'une synthèse de composés radiomarqués, qui permettent un ou plusieurs rinçage(s) du radiosynthétiseur (et donc optimise le rendement de la radiosynthèse, en minimisant les pertes dans le radiosynthétiseur) sans augmenter le volume injecté sur la colonne.

Un autre objectif de l'invention est de fournir un dispositif et un procédé de pré-purification et d'injection d'un échantillon brut issu d'une synthèse de composés radiomarqués, vers un système de chromatographie à haute pression, qui permettent un contrôle du volume injecté, quel que soit le volume initial dudit échantillon brut et permettant ainsi une meilleure reproductibilité de la chromatographie.

Encore un autre objectif de l'invention est de fournir un dispositif et un procédé de pré-purification et d'injection d'un échantillon brut issu d'une synthèse de composés radiomarqués, qui permettent une seule injection (automatique) vers le système de chromatographie, quel que soit le volume initial de l'échantillon, et donc avec un gain de temps.Encore un autre objectif de l'invention est de fournir un dispositif et un procédé de pré-purification et d'injection d'un échantillon brut issu d'une synthèse de composés radiomarqués, qui permettent aussi une filtration, empêchant ainsi tout bouchage ultérieur de la colonne de chromatographie.

Pour atteindre ces objectifs, il est prévu suivant l'invention une cartouche de pré-purification d'un échantillon liquide comprenant des composés radiomarqués destinés à être purifiés ou analysés par chromatographie à haute pression.

En particulier, la cartouche de l'invention comprend :
- une enveloppe,
- des moyens de filtration,
- une chambre dont le volume est délimité par l'enveloppe et les moyens de filtration, ladite chambre comprenant une phase stationnaire solide, et
- des moyens de communication fluidique en amont et en aval de ladite chambre et desdits moyens de filtration,
ladite enveloppe et lesdits moyens de communication fluidiques étant aptes à résister mécaniquement à une pression fluidique supérieure ou égale à 50 bars.

Il est également prévu suivant l'invention un dispositif de pré-purification et d'injection dans un système de chromatographie à haute pression d'un échantillon liquide comprenant des composés radiomarqués.

En particulier, le dispositif de l'invention comprend :
- une vanne multivoies,
- un moyen d'alimentation d'un échantillon liquide comprenant des composés radiomarqués,
- une pompe d'une phase d'élution,
- une cartouche selon l'invention,
- un moyen d'évacuation,
ladite vanne étant en communication fluidique avec le moyen d'alimentation, la pompe, la cartouche, le moyen d'évacuation et un système de chromatographie à haute pression.

Finalement, il est également prévu suivant l'invention un procédé de pré-purification et d'injection dans un système de chromatographie à haute pression d'un échantillon liquide comprenant des composés radiomarqués.

En particulier, le procédé de l'invention comprend, dans l'ordre :
(i) une étape de chargement comprenant :
   - l'alimentation au travers d'une vanne multivoies en position de chargement d'une cartouche selon l'invention avec un échantillon liquide comprenant des composés radiomarqués,
   - la rétention de composés radiomarqués par la cartouche,
   - l'évacuation d'éléments non-retenus par ladite cartouche vers un moyen d'évacuation au travers de la vanne multivoies;
(ii) une étape d'injection comprenant :
   - l'aspiration par une pompe d'une phase d'élution au travers de la vanne multivoies en position d'injection vers ladite cartouche,
   - la libération des composés radiomarqués retenus par la cartouche,
   - l'introduction de la phase d'élution comprenant les composés radiomarqués dans un système de chromatographie à haute pression au travers de la vanne multivoies.

L'invention est ainsi basée sur une approche nouvelle et inventive. En particulier, les inventeurs ont constaté, de manière surprenante, qu'en remplaçant, dans le dispositif d'injection usuelle dans un système de chromatographie haute pression (type HPLC ou SFC), la boucle d'injection par une cartouche comprenant les caractéristiques de l'invention, il était possible, quel que soit le volume initial de l'échantillon comprenant des composés radiomarqués, d'augmenter significativement le rendement de la synthèse en (i) diminuant significativement le temps de la séparation (jusqu'à un facteur 4) et en (ii) permettant le rinçage du radiosynthétiseur (et donc minimisant la perte de composés dans le radiosynthétiseur) sans augmenter le volume injecté sur la colonne. Par souci de clarté, il est donc entendu que la boucle d'injection usuelle dans les systèmes de chromatographie à haute pression est supprimée dans le dispositif de l'invention, ou en d'autres mots, le dispositif de l'invention n'inclut pas de boucle d'injection.

De plus, l'invention permet également d'éviter les opérations manuelles et d'automatiser l'injection.

D'autres caractéristiques, détails et avantages de l'invention ressortiront de la description et des figures donnée ci-après, à titre non limitatif.

Dans la présente description et les revendications, il est bien entendu que, tels qu'utilisés ici, les termes « un », « une » ou « le » signifient « au moins un » et ne doivent pas être limités à « un seul », sauf indication contraire explicite. Les termes « comprendre », « inclure », « contenir » et « avoir » ont un sens ouvert et n'excluent pas la présence d'éléments supplémentaires. De plus, lorsqu'une plage de valeur est indiquée, les extrémités sont incluses. Finalement, toutes les valeurs intégrales et de sous-domaine dans les plages numériques sont expressément incluses comme si explicitement écrites.

Selon l'invention, la cartouche permet la pré-purification d'un échantillon liquide comprenant des composés radiomarqués destinés à être purifiés ou analysés par chromatographie à haute pression.

Selon l'invention, la pré-purification de l'échantillon liquide peut également correspondre à ou inclure une concentration de l'échantillon, en particulier une concentration des composés radiomarqués.

En particulier, l'échantillon selon l'invention peut comprendre un type de composés radiomarqués ou plusieurs types de composés radiomarqués. Les composés radiomarqués selon l'invention sont, par exemple, des molécules organiques, telle que (i) des sucres (par ex., du glucose) ou des acides aminés, portant un radioisotope comme le carbone-11, le fluor-18, l'iode-131, l'yttrium-90 ou l'actinium-225.

Selon l'invention, l'échantillon liquide comprend des composés radiomarqués qui sont destinés à être purifiés ou analysés par chromatographie à haute pression. La cartouche de l'invention est en effet adaptée à la chromatographie analytique (qui permet, par exemple, de détecter la présence ou la formation d'un ou plusieurs composé(s)) ou à la chromatographie préparative ou semi-préparative (qui permet, par exemple, de collecter un ou plusieurs(s) composé(s) purifié(s) au départ de l'échantillon brut issu d'une synthèse).

Selon l'invention, l'échantillon liquide peut être un échantillon en phase aqueuse ou en phase organique ou biphasique (aqueuse/organique) ou une émulsion. De préférence, l'échantillon liquide est un échantillon monophasique en phase aqueuse. La phase aqueuse selon l'invention comporte au moins 40% (en volume) d'eau et de préférence, au moins 50% d'eau, voire au moins 70% d'eau.

Selon l'invention, la cartouche comprend des moyens de filtration. Les moyens de filtration selon l'invention permettent (avec l'enveloppe) de maintenir/piéger la phase stationnaire solide dans la chambre en permettant le passage des fluides et en filtrant l'échantillon brut de ses éventuelles particules solides (empêchant ainsi tout bouchage de la colonne de chromatographie lors de la purification par chromatographie à haute pression).

De manière préférée, les moyens de filtration sont choisis parmi les membranes de filtration et les frittés.

Selon l'invention, la cartouche comprend une chambre dont le volume est délimité par l'enveloppe et les moyens de filtration. De manière préférée, la chambre a un volume compris entre 50 et 2000mm³. De manière toute préférée, la chambre a un volume compris entre 50 et 1000 mm³. Ces volumes sont particulièrement adaptés aux volumes des échantillons liquides issus de la radiosynthèse.

Selon l'invention, la chambre comprend une phase stationnaire solide. Par « phase stationnaire solide », on entend la définition communément admise dans le domaine de la séparation/chromatographie de composants chimiques dans un mélange: la « phase stationnaire solide» est le composé sous forme solide utilisé pour retenir/adsorber les composants d'un mélange à séparer. Cette phase est immobile, par opposition avec la phase mobile (liquide ou gazeuse) qui migre à travers la phase stationnaire. Les interactions d'adsorption se produisant entre la phase stationnaire solide et les composants peuvent être de divers types : liaisons hydrogène, interactions hydrophobes/hydrophiles, interactions dipôle-dipôle, interactions ioniques, etc.

La phase stationnaire solide selon l'invention comprend avantageusement des particules de taille dans la gamme comprise entre 20 et 100 microns, de préférence entre 30 et 80 microns.

La phase stationnaire solide selon l'invention peut être de type phase inverse ou de type phase normale ou de type échangeuse d'ions ou de type mode mixte. La phase stationnaire solide dans l'invention est choisie en fonction des composants radiomarqués à purifier (et donc à retenir). Elle peut ainsi être plus ou moins polaire.

Selon un mode de réalisation préféré de l'invention, la phase stationnaire solide est de type phase inverse. Selon ce mode de réalisation, de manière préférée, la phase stationnaire solide est de type C8 (phase à base de silice greffée de chaînes octanes), C18 (phase à base de silice greffée de chaînes octadécyliques) ou HLB. De manière toute préférée, la phase stationnaire solide est de type C18.

Selon un autre mode de réalisation de l'invention, la phase stationnaire solide est de type « mode mixte ». Par phase stationnaire solide de type mode mixte, on entend qu'elle combine le type phase inverse et le type échangeuse d'ions. Des exemples sont les phases stationnaires dites MCX ("strong cation exchange"), MAX ("strong anion exchange"), WCX ("weak cation exchange") ou WAX (" weak anion exchange").

La phase stationnaire solide selon l'invention est piégée/retenue dans la chambre grâce à l'enveloppe et les moyens de filtration délimitant le volume de la chambre.

Selon un mode de réalisation, la phase stationnaire solide occupe au moins 70% du volume de la chambre (sans considérer la porosité microscopique éventuelle de la phase stationnaire solide). De préférence, elle occupe au moins 80% du volume de la chambre, voire même au moins 90% du volume de chambre. Ceci permet d'avoir moins de « volumes morts » dans la cartouche de l'invention, ce qui est avantageux pour, d'une part, contrôler (par exemple, diminuer) le volume d'injection et ainsi améliorer la purification par chromatographie, et d'autre part, permettre d'injecter un maximum des composés radiomarqués dans le système de chromatographie (et augmenter ainsi le rendement).

Avantageusement, une ou plusieurs réaction(s) chimique(s) impliquant des composants radiomarqués retenus sur la phase stationnaire solide peuvent être réalisée(s) dans la cartouche de l'invention. Des exemples des réactions chimiques qui peuvent être opérées sont : hydrolyse basique ou acide, réduction, oxydation et halogénation.

Selon l'invention, la cartouche comprend des moyens de communication fluidique en amont et en aval de la chambre et des moyens de filtration. En particulier, les moyens de communication fluidique selon l'invention sont adjacents aux moyens de filtration. Les moyens de communication fluidique et les moyens de filtration sont ainsi disposés afin de permettre le passage d'un liquide d'amont en aval au travers de la chambre.

Les moyens de communication fluidique en amont et en aval de la chambre et des moyens de filtration selon l'invention peuvent être du type classiquement utilisés dans le domaine des chromatographies à haute pression.

Selon l'invention, l'enveloppe et les moyens de communication fluidique sont aptes à résister mécaniquement à une pression fluidique supérieure ou égale à 50 bars, de préférence, supérieure ou égale à 100 bars et de manière toute préférée, supérieure ou égale à 150 bars.

Selon un mode de réalisation, l'enveloppe et/ou les moyens de communication sont dans un matériau choisi parmi le PEEK ou l'acier inoxydable ou le téflon ou le polyoxyméthylène. De préférence, l'enveloppe et les moyens de communication sont dans un matériau choisi parmi le PEEK ou l'acier inoxydable ou le téflon ou le polyoxyméthylène (POM). De manière plus préférée, l'enveloppe et/ou les moyens de communication sont dans un matériau choisi parmi le PEEK ou l'acier inoxydable. De manière toute préférée, l'enveloppe et les moyens de communication sont dans un matériau choisi parmi le PEEK ou l'acier inoxydable. Le matériau de l'enveloppe et des moyens de communication peut être choisi indépendamment.

Selon un mode de réalisation, lorsque l'enveloppe de la cartouche est en PEEK, ladite enveloppe a une épaisseur minimale de 0,6 mm, et de préférence, une épaisseur minimale de 1 mm, et de manière plus préférée, une épaisseur minimale de 2,5 mm. Ces épaisseurs permettent à la cartouche de l'invention de résister mécaniquement aux hautes pressions nécessaires pour les systèmes de chromatographie visés, c'est-à-dire une pression fluidique supérieure ou égale à 50 bars, supérieure ou égale à 100 bars et supérieure ou égale à 150 bars, respectivement.

Selon un autre mode de réalisation, lorsque l'enveloppe de la cartouche est en acier inoxydable, ladite enveloppe a une épaisseur minimale de 0,25 mm, et de préférence, une épaisseur minimale de 0.75 mm, et de manière plus préférée, une épaisseur minimale de 1 mm. Ces épaisseurs permettent à la cartouche de l'invention de résister mécaniquement aux hautes pressions nécessaires pour les systèmes de chromatographie visés, c'est-à-dire une pression fluidique supérieure ou égale à 50 bars, supérieure ou égale à 100 bars et supérieure ou égale à 150 bars, respectivement.

Selon un autre mode de réalisation, lorsque l'enveloppe de la cartouche est en téflon, ladite enveloppe a une épaisseur minimale de 5 mm, et de préférence, une épaisseur minimale de 8 mm, et de manière plus préférée, une épaisseur minimale de 12 mm. Ces épaisseurs permettent à la cartouche de l'invention de résister mécaniquement aux hautes pressions nécessaires pour les systèmes de chromatographie visés, c'est-à-dire une pression fluidique supérieure ou égale à 50 bars, supérieure ou égale à 100 bars et supérieure ou égale à 150 bars, respectivement.

Selon un autre mode de réalisation, lorsque l'enveloppe de la cartouche est en polyoxyméthylène, ladite enveloppe a une épaisseur minimale de 2 mm, de préférence, une épaisseur minimale de 4 mm, et de manière plus préférée, une épaisseur minimale de 5 mm. Ces épaisseurs permettent à la cartouche de l'invention de résister mécaniquement aux hautes pressions nécessaires pour les systèmes de chromatographie visés, c'est-à-dire une pression fluidique supérieure ou égale à 50 bars, supérieure ou égale à 100 bars et supérieure ou égale à 150 bars, respectivement.

Dans le cas où l'enveloppe a une épaisseur qui varie dans la largeur et/ou la longueur de la cartouche, l'épaisseur minimale de l'enveloppe selon l'invention doit être réalisée dans toute sa largeur et toute sa longueur.

Selon l'invention, le dispositif de pré-purification et d'injection dans un système de chromatographie à haute pression d'un échantillon liquide comprenant des composés radiomarqués comprend :
- une vanne multivoies,
- un moyen d'alimentation d'un échantillon liquide comprenant des composés radiomarqués,
- une pompe d'une phase d'élution,
- une cartouche selon l'invention,
- un moyen d'évacuation,
ladite vanne étant en communication fluidique avec le moyen d'alimentation, la pompe, la cartouche, le moyen d'évacuation et un système de chromatographie à haute pression.

Par souci de clarté et comme déjà expliqué plus haut, la boucle d'injection usuelle dans les systèmes de chromatographie à haute pression est supprimée dans le dispositif de l'invention et remplacée par ladite cartouche, ou en d'autres mots, le dispositif de l'invention n'inclut pas de boucle d'injection.

Selon un mode de réalisation du dispositif de l'invention, la vanne multivoies est une vanne rotative, une électrovanne ou une vanne pneumatique. La vanne multivoies de l'invention peut par exemple comprendre 4 voies, 6 voies, 8 voies ou 10 voies.

Selon un mode de réalisation du dispositif de l'invention, le moyen d'alimentation d'un échantillon liquide est une sortie d'un module de radiosynthèse.

Selon un mode de réalisation du dispositif de l'invention, la pompe est en communication fluidique avec un réservoir d'une phase d'élution.

Selon un mode de réalisation du dispositif de l'invention, le moyen d'évacuation est en communication fluidique avec un réservoir « déchet ».

Avantageusement, le dispositif de l'invention peut également comprendre un moyen de chauffage de la cartouche, en particulier de la chambre de la cartouche. Ceci permet d'augmenter la température de la phase stationnaire au-delà de la température ambiante ce qui peut aider à l'adsorption/désorption sur la phase stationnaire, ou être bénéfique voire nécessaire dans le cas où une ou plusieurs(s) réaction(s) chimique(s) sont opérée(s) dans la cartouche et nécessitent des températures supérieures à la température ambiante pour se produire efficacement. Par exemple, un moyen chauffant adapté à l'invention est constitué d'un manchon chauffant entourant la cartouche.

Le système de chromatographie est de type SFC. La chromatographie de type SFC est avantageuse en ce qu'elle permet une séparation rapide et permet de s'affranchir d'une étape de reformulation car le composé purifié peut être récupéré dans un solvant bio-compatible (par ex., de l'éthanol).

Lorsque le système de chromatographie est de type SFC, une chambre de mélange est prévue en communication fluidique avec (i) la vanne multivoies du dispositif de l'invention, (ii) une colonne de chromatographie, et (iii) une pompe à fluide supercritique, par exemple une pompe à CO₂.

Avantageusement également, lorsque le système de chromatographie est de type SFC, la pompe du dispositif de l'invention peut être utilisée pour fournir un co-solvant ou modifiant qui permet, par exemple, de modifier la polarité du fluide supercritique. Dans ce cas, ladite phase d'élution constitue ledit co-solvant. De manière préférée, selon ce mode de réalisation, la phase d'élution est de l'éthanol.

Selon l'invention, le procédé de pré-purification et d'injection dans un système de chromatographie à haute pression d'un échantillon comprenant des composés radiomarqués, comprend, dans l'ordre, une étape de chargement et une étape d'injection.

Selon l'invention, l'étape de chargement comprend :
- l'alimentation au travers d'une vanne multivoies en position de chargement d'une cartouche selon l'invention avec un échantillon liquide comprenant des composés radiomarqués,
- la rétention des composés radiomarqués par la cartouche,
- l'évacuation d'éléments non-retenus par ladite cartouche vers un moyen d'évacuation au travers de la vanne multivoies.

Selon l'invention, à l'étape de chargement, la vanne multivoies est en position de chargement.

Selon l'invention, avantageusement, l'échantillon liquide peut venir directement d'un module de radiosynthèse.

Selon un mode préféré, le volume de l'échantillon comprenant des composés radiomarqués est entre 0,5ml et 20ml. De préférence, le volume de l'échantillon comprenant des composés radiomarqués est entre 1 et 15 ml, voire entre 5ml et 10ml.

Selon l'invention, à l'étape de chargement, la rétention des composés radiomarqués par la cartouche se fait grâce à la phase solide stationnaire qui permet de piéger (par exemple, par adsorption), entre autres, les composés radiomarqués. D'autres composants de l'échantillon peuvent être retenus sur la phase stationnaire en fonction de leur affinité pour ladite phase (par exemple, le ou les précurseur(s) de synthèse). Les éléments non-retenus par la cartouche, par exemple le(s) solvant(s) de synthèse, sont par contre évacués vers un moyen d'évacuation, par exemple en communication fluidique avec un réservoir « déchet ».

Selon un mode de réalisation particulier de l'étape de chargement, la rétention des composés radiomarqués par la cartouche peut être accompagnée de réaction(s) chimique(s) desdits composés radiomarqués dans la cartouche, en particulier sur ladite phase stationnaire solide. Des exemples de réactions chimiques qui peuvent être opérées selon ce mode de réalisation sont des hydrolyses basiques ou acides, des réductions, des oxydations et des halogénations. Lesdites réactions peuvent être opérées à température ambiante ou à des températures supérieures à la température ambiante. Dans le cas où des températures supérieures à la température ambiante sont nécessaires ou utiles, un manchon chauffant peut être prévu, entourant la cartouche, en particulier son enveloppe.

Selon l'invention, l'étape d'injection comprend :
- l'aspiration par une pompe d'une phase d'élution au travers de la vanne multivoies en position d'injection vers ladite cartouche,
- la libération des composés radiomarqués retenus par la cartouche,
- l'introduction de la phase d'élution comprenant les composés radiomarqués dans un système de chromatographie à haute pression au travers de la vanne multivoies.

La libération des composés radiomarqués peut s'accompagner de la libération d'autres composés organiques (résidus de synthèses, précurseurs, etc) également retenus sur la cartouche.

Selon l'invention, à l'étape d'injection, la vanne multivoies est en position d'injection.

Selon l'invention, à l'étape d'injection, une phase d'élution est aspirée par une pompe vers la cartouche, entraînant la libération (par ex., par désorption) dans la phase d'élution des composés radiomarqués retenus par la cartouche.

Ladite phase d'élution comprenant les composés radiomarqués est ensuite introduite dans un système de chromatographie à haute pression. Le système de chromatographie à haute pression est de type SFC.

Selon un mode de réalisation particulier, la phase d'élution est, par exemple, du méthanol, de l'éthanol, de l'acétonitrile, de l'eau ou une solution aqueuse. Des additifs peuvent également être ajoutés pour, par exemple, influencer le pH de la phase d'élution (par exemple, de la triéthylamine, de l'acide acétique...).

Lorsque le système de chromatographie à haute pression est de type SFC, la phase d'élution est avantageusement de l'éthanol. L'éthanol est un co-solvant (ou modifiant) approprié à la SFC et il s'agit d'un solvant bio-compatible qui permet de faciliter l'étape de reformulation (par exemple, en la réduisant à une simple dilution par de l'eau ou une solution saline ou toute autre solution tamponnée bio-compatible).

Lorsque le système de chromatographie à haute pression est de type SFC, selon un mode de réalisation alternatif, la phase d'élution est la phase supercritique, préférentiellement du CO₂. Avantageusement, la phase d'élution peut être un mélange de la phase supercritique, par exemple du CO₂, et d'un modifiant, par exemple de l'éthanol.

Selon le procédé de l'invention, la phase d'élution comprenant les composés radiomarqués est introduite dans un système de chromatographie à haute pression, ledit système comprenant une colonne de chromatographie.

Les autres éléments du système de chromatographie, en particulier du type SFC, et les étapes de la purification ou de l'analyse sont connus de l'état de la technique sans qu'il soit nécessaire ici de les détailler plus avant.

Selon un mode de réalisation particulier, le procédé de l'invention comprend, après l'étape de chargement et avant l'étape d'injection, au moins une étape de chargement secondaire, comprenant :
- l'alimentation au travers de la vanne multivoies en position de chargement de la cartouche avec une fraction liquide secondaire comprenant des composés radiomarqués,
- la rétention des composés radiomarqués par la cartouche,
- l'évacuation d'éléments non-retenus par ladite cartouche vers un moyen d'évacuation au travers de la vanne multivoies.

Selon ce mode de réalisation, la vanne multiport est en position de chargement.

Par « fraction liquide secondaire», on entend une fraction qui provient du rinçage/nettoyage avec une phase de nettoyage du moyen d'alimentation en échantillon et/ou d'un module de radiosynthèse situé en amont du moyen d'alimentation, ou encore on entend un deuxième échantillon liquide comprenant des composés radiomarqués (cette étape constitue alors une répétition de l'étape de chargement).

Selon ce mode, la fraction liquide secondaire vient donc « charger » davantage la cartouche, déjà chargée des composés radiomarqués provenant de l'échantillon liquide à l'étape de chargement selon l'invention.

Dans le cas où la fraction liquide secondaire provient d'un ou plusieurs rinçage(s)/nettoyage(s), les éléments non-retenus par la cartouche et qui sont évacués vers le moyen d'évacuation sont principalement constitués de la phase de nettoyage.

Le dispositif et le procédé de l'invention permettent dès lors de manière très avantageuse plusieurs rinçage(s) des éléments situés en amont de la pré-purification et de l'injection (module de synthèse, moyen d'alimentation, etc), augmentant ainsi le rendement de la synthèse, sans augmenter le volume d'injection car la phase de nettoyage est éliminée/évacuée (évitant ainsi la dilution préjudiciable aux performances chromatographiques et à la pureté du produit final).

Selon ce mode de réalisation, la phase de nettoyage est choisie parmi l'eau, les tampons aqueux et les solvants organiques. De préférence, la phase de nettoyage est de l'eau.

Selon un autre mode de réalisation particulier, le procédé de l'invention comprend, après l'étape d'injection, une étape de régénération de la cartouche. Selon ce mode de réalisation, à l'étape de régénération, la vanne multiport est en position de chargement.

L'étape de régénération comprend, dans l'ordre, (i) l'alimentation de la cartouche avec une phase de régénération, et (ii) l'évacuation de ladite phase vers un moyen d'évacuation. Cette étape permet de nettoyer complètement la cartouche, en particulier la phase stationnaire solide, d'éventuels résidus et de revenir à son état initial afin de permettre un nouveau cycle « chargement-injection ». Ceci est particulièrement avantageux car la cartouche de l'invention est dès lors ré-utilisable un certain nombre de fois.

Selon ce mode de réalisation, la phase de régénération est choisie parmi l'eau, les tampons aqueux et les solvants organiques. De préférence, la phase de régénération est la phase d'élution.

Des exemples de réalisation de l'invention sont décrits à l'aide des figures. Il doit être entendu que ces figures servent simplement d'exemples de la façon dont l'invention peut être mise en œuvre, et ne sont en aucun cas destinées à être interprétées comme limitant la portée de l'invention et des revendications. Dans les figures :
La figure 1 est une vue en coupe latérale d'un mode de réalisation possible d'une cartouche de pré-purification selon l'invention.
La figure 2 représente un mode de réalisation possible d'un dispositif de pré-purification et d'injection selon la présente invention.
La figure 3a illustre un mode de réalisation possible d'un dispositif selon la présente invention, en position de chargement.
La figure 3b illustre un mode de réalisation possible d'un dispositif selon la présente invention, en position d'injection.

Sur les figures, les éléments identiques ou analogues portent les mêmes références. Les numéros de référence dans les revendications ne doivent pas être interprétés comme limitant l'invention.

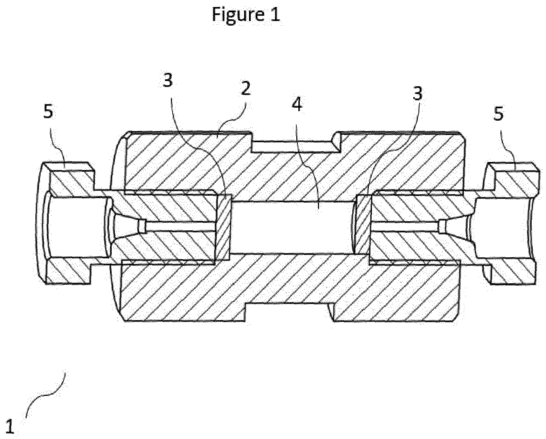

La figure 1 illustre une cartouche de pré-purification (1) d'un échantillon comprenant des composés radiomarqués destinés à être purifiés ou analysés par chromatographie à haute pression.

La cartouche (1) comprend une enveloppe (2), l'enveloppe (2) est en PEEK (matériau apte à résister à de hautes pressions comme dans le cas de chromatographie de type SFC ou HPLC) d'épaisseur de 4,5 mm.

La cartouche (1) comprend également des moyens de filtration (3).

La cartouche (1) comprend une chambre (4) dont le volume est délimité par l'enveloppe (2) et les moyens de filtration (3).

La cartouche (1) comprend également des moyens de communication fluidique (5) en PEEK, en amont et en aval de la chambre (4) et des moyens de filtration (3). Ces moyens de communication (5) permettent de lier fluidiquement la cartouche (1) au dispositif dans lequel elle sera intégrée (par exemple le dispositif selon l'invention décrit ci-après). Les moyens de communication fluidique (5) sont adjacents aux moyens de filtration. Les moyens de communication fluidique (5) et les moyens de filtration (3) permettent le passage de l'échantillon liquide d'amont en aval au travers de la chambre.

La chambre (4) comprend un phase stationnaire solide de type phase inverse C18 permettant de retenir les composés radiomarqués (par ex., par adsorption). La phase stationnaire solide permet ainsi avantageusement de réaliser une pré-purification de l'échantillon. Les moyens de filtrations (3) permettent (avec l'enveloppe) de maintenir la phase stationnaire solide dans le volume de la chambre tout en permettant le passage de l'échantillon liquide en le filtrant de ses éventuelles particules solides (empêchant ainsi avantageusement tout bouchage de la colonne lors de la purification ultérieure par chromatographie à haute pression).

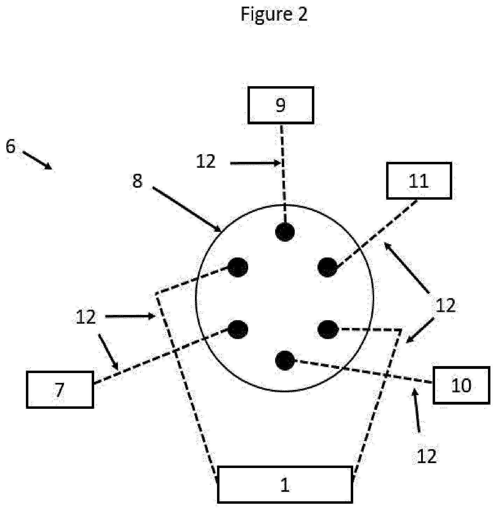

La figure 2 illustre un dispositif de pré-purification et d'injection (6) dans un système de chromatographie à haute pression (7) d'un échantillon liquide comprenant des composés radiomarqués. Le dispositif (6) comprend une vanne multivoies, à 6 voies (8). Cette vanne multivoies (8) permet de connecter fluidiquement (12) entre eux tous les éléments du dispositif, notamment un moyen d'alimentation (9), une pompe (10) d'une phase d'élution, une cartouche (1), un moyen d'évacuation (11). La vanne permet également de connecter fluidiquement (12) un système de chromatographie à haute pression (7) au dispositif de l'invention. Le moyen d'alimentation (9) permet d'approvisionner le dispositif (6) en échantillons liquides de composés radiomarqués, par exemple provenant d'un module de radiosynthèse. La pompe (10) d'une phase d'élution permet d'aspirer une phase d'élution dans le dispositif (6). La cartouche (1) permet la pré-purification de l'échantillon liquide comprenant des composés radiomarqués.

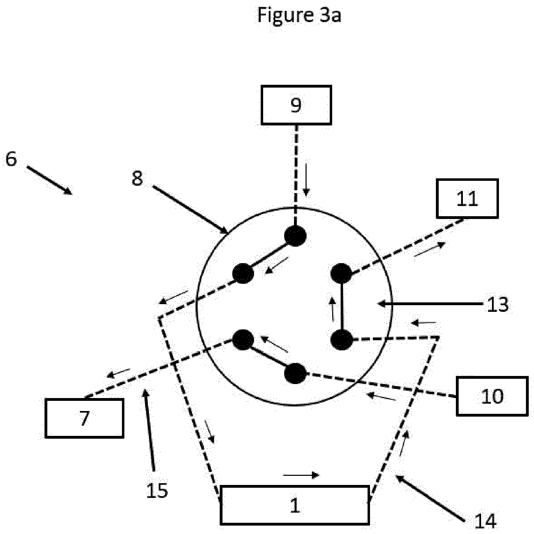

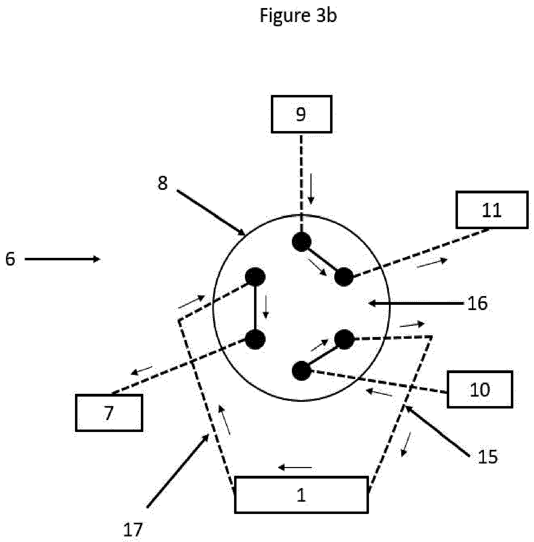

Les figures 3a et 3b illustrent des modes de réalisation du dispositif (6) de la figure 2 en fonctionnement ainsi que du procédé de l'invention.

La figure 3a illustre l'étape de chargement. Dans cette première étape, la vanne multivoies (à 6 voies) (8) est en position de chargement (13). La position de chargement (13) permet d'alimenter la cartouche (1) en échantillons liquides comprenant des composés radiomarqués grâce au moyen d'alimentation (9). Lorsque l'échantillon passe à travers de la cartouche (1), les composés radiomarqués sont retenus par la phase stationnaire solide. Cela permet ainsi avantageusement de concentrer et/ou de prépurifier à ce stade du procédé les composés radiomarqués. Les éléments non-retenus (14) par la cartouche (1) (c'est-à-dire les composants ayant peu ou pas d'affinités avec la phase stationnaire) s'écoulent au-delà de la cartouche, au travers de la vanne multivoies (8) vers un moyen d'évacuation (11).

La position de chargement peut également être utilisée pour réaliser une étape de chargement secondaire, en alimentant la cartouche (1) grâce au moyen d'alimentation (9) avec une fraction liquide secondaire comprenant des composés radiomarqués (par ex., une fraction qui provient du rinçage/nettoyage avec une phase de nettoyage d'un module de radiosynthèse situé en amont du moyen d'alimentation (9)). Dans ce cas, la fraction liquide secondaire vient donc « charger » davantage la cartouche, déjà chargée des composés radiomarqués provenant de l'échantillon liquide alimenté à la première étape de chargement. Durant cette étape de chargement secondaire (qui peut être répétée), les composés radiomarqués provenant par exemple du nettoyage d'un module de synthèse sont donc récupérés sur la cartouche et participeront à améliorer le rendement de la radiosynthèse. Par contre, la phase de nettoyage et d'autres éléments non retenus sur la cartouche seront éliminés vers le moyen d'évacuation (11). Ceci permet donc le nettoyage du module de radiosynthèse et du moyen d'alimentation pour récupérer au maximum les composés radiomarqués, sans impacter le volume final de l'échantillon qui sera injecté dans le système de chromatographie (7). En effet, ce volume pourra être choisi/contrôlé lors de l'étape suivante d'injection

En outre, dans cette étape de chargement et de façon usuelle la phase d'élution (15) peut être envoyée directement vers le système de chromatographie (7) au travers de la vanne multivoies (8). Ceci permet d'équilibrer la colonne de chromatographie pendant le chargement de la cartouche (1).

La figure 3b illustre l'étape d'injection. Dans cette deuxième étape du procédé, la vanne multiport (8) est en position d'injection (16). La position d'injection (16) permet d'éluer la cartouche (1) des composés radiomarqués qui y sont retenus et d'injecter l'échantillon concentré et/ou pré-purifié dans un système de chromatographie (7) en vue de sa purification (ou de son analyse). Cela permet également de filtrer l'échantillon au préalable par la cartouche (1) et ainsi éviter le bouchage de la colonne de chromatographie. Dans cette étape d'injection, une pompe (10) aspire une phase d'élution (15) au travers de la vanne multivoies (8) vers ladite cartouche (1), ce qui provoque la libération des composés radiomarqués retenus par la cartouche (1), qui sont donc élués. La phase d'élution comprenant les composés radiomarqués (17) est ensuite injectée dans le système de chromatographie à haute pression (7) au travers de la vanne multivoies (8). La phase d'élution comprenant les composés radiomarqués (17) constitue donc un échantillon concentré et/ou prépurifié par rapport à l'échantillon initial (avant passage dans la cartouche). En particulier, le volume initial a pu être adapté (par exemple, diminué), le solvant a pu être modifié, certains éléments (ceux non-retenus par la cartouche) ont été éliminés, et les particules solides éventuellement présentes ont pu être filtrées.

En outre, dans cette étape d'injection, le moyen d'alimentation (9) est en connexion fluidique avec le moyen d'évacuation (11). Cela permet de nettoyer le moyen d'alimentation (9), et de le rincer avant la prochaine phase de chargement. Cela a pour avantage de réduire les risques de contamination ultérieur et/ou le risque de formation d'agrégats qui pourraient bloquer le système et demander une maintenance.

L'exemple suivant est fourni à des fins d'illustration et n'est pas destiné à limiter la portée de la présente invention.

### Exemple

Le présent exemple correspond à la purification automatisée d'un traceur radioactif marqué au fluor-18, le composé [¹⁸F]-AV-45, avec une cartouche, un dispositif et un procédé selon l'invention.

Une cartouche selon l'invention, en PEEK et d'un volume de 785 mm², a été remplie manuellement avec 90 mg de phase stationnaire de type HLB (Hydrophilic-Lipophilic Balance, cartouche Waters HLB Plus Short de référence 186000132) dont la taille des particules est de 50-65 microns.

La radiosynthèse automatisée (piégeage de fluor-18 sur cartouche QMA, élution du fluor-18, séchage du fluor-18 dans le réacteur, marquage, hydrolyse, neutralisation) a été effectuée sur un premier module (NEPTIS^{®} xSeedTM) avec 2,0 mg de précurseur dans 2,0 mL de DMSO.

Le brut réactionnel neutralisé a été dilué manuellement avec de l'eau à 10 mL avec une seringue luer-lock de 10 mL. Celle-ci a été placée manuellement dans un pousse-seringue et le chargement de la cartouche selon l'invention a ensuite été réalisé automatiquement. La vitesse du pousse-seringue est de 4mm/6sec et un vide relatif de -0.9 bar est appliqué. Une fois le chargement terminé, la seringue n'est pas rincée, et l'opérateur active la vanne d'injection (8) en mode injection (selon la Figure 2) via le logiciel NEPTIS^{®}.

La trace UV a été enregistrée en lançant simultanément et manuellement l'acquisition via le logiciel du module SFC.

Afin de suivre le produit marqué au fluor-18, un radiodétecteur a été placé au contact de la cartouche et un deuxième en sortie du système de purification SFC. Ce deuxième radiodétecteur permet à l'opérateur d'activer une vanne de collecte afin de collecter le pic radioactif dans le flacon de collecte.

Pour cet exemple, l'activité présente dans la seringue de 10 mL avant chargement sur la cartouche était de 11.4 mCi (420 MBq).

La colonne « semi-prep » utilisée était une colonne Phenomenex Polar RP 10 µm, 250 x 10 mm.

Les conditions SFC étaient les suivantes :
- Eluant : CO₂/EtOH 95/5 ;
- Débit : 20 mL/min ;
- Régulateur de pression à 150 bars et chauffé à 60 °C ;
- Détection UV à 254 nm ;
- Température du système SFC : entre 25 et 30°C.

Selon les mesures effectuées, 90% de l'activité sur la cartouche a été éluée en 1 minute, avec l'éluant CO₂/EtOH 95/5.

Le pic radioactif lié au composé [¹⁸F]-AV-45 sort entre 6'20'' et 7'30''. A titre de comparaison, en purification HPLC [¹⁸F]-AV-45 est communément élué vers 15'.

A la fin de la collecte, le flacon final est manuellement dévissé du module de collecte et inséré dans un activimètre afin de mesurer son activité.

Les résultats issus de cet exemple sont présentés dans le tableau suivant (mesures des activités résiduelles et du rendement de la synthèse au cours du procédé (A0 : activité initiale; d.c. : « decay corrected », corrigé de la décroissance du fluor-18).

| | **A (mCi)** | **t+t0 (min)** | **A (mCi, d.c.)** | **% A0 (d.c.)** |
|---|---|---|---|---|
| **A0 sur QMA (module NEPTIS^{®} xSeed^{™})** | 13.95 | 0 | | 100 |
| **Fin de la neutralisation** | | 18 | | |
| **Activité dans la seringue de 10 mL** | 11.41 | 24 | 13.28 | 95.0 |
| **Début de la purification SFC** | | 27 | | |
| **Fin de la collecte du pic** | | 35 | | |
| **Flacon de collecte** | **4.16** | **50** | **5.701** | **41.0 *** |
| **Déchet piégeage cartouche** | 4.23 | 51 | 5.84 | 42.0 ** |
| **Déchet purification SFC** | 0.56 | 53 | 0.78 | 5.6 |
| **Rinçage de la colonne SFC** | 0.03 | 65 | 0.05 | 0.3 |
| **Seringue de 10 mL** | 0.10 | 66 | 0.15 | 1.0 |
| **Activité retrouvée** | | | | 89.9 |

| | | | | |
|---|---|---|---|---|
| * En fin de synthèse, t0 + 35 min, l'activité aurait été de 4.57 mCi soit un rendement non corrigé de la décroissance de 33%. ** 4% de l'activité du déchet liquide lié au chargement de la cartouche est du produit marqué. | | | | |

## Revendications

1. Dispositif de pré-purification et d'injection (6) dans un système de chromatographie à haute pression (7) d'un échantillon liquide comprenant des composés radiomarqués, ledit dispositif comprenant :
- une vanne multivoies (8)
- un moyen d'alimentation (9) d'un échantillon liquide comprenant des composés radiomarqués,
- une pompe (10) d'une phase d'élution,
- une cartouche comprenant une
∘ enveloppe (2),
∘ des moyens de filtration (3),
∘ une chambre (4) dont le volume est délimité par ladite enveloppe (2) et les dits moyens de filtration (3), ladite chambre comprenant une phase stationnaire solide, et
∘ des moyens de communication fluidique (5) en amont et en aval de ladite chambre (3) et desdits moyens de filtration (3),
ladite enveloppe (2) et lesdits moyens de communication fluidique (5) étant aptes à résister mécaniquement à une pression fluidique supérieure ou égale à 50 bars,
- un moyen d'évacuation (11),
ladite vanne étant en communication fluidique (12) avec le moyen d'alimentation (9), la pompe (10), la cartouche (1), le moyen d'évacuation (11) et un système de chromatographie à haute pression (7) ;
**caractérisé en ce que** ledit système de chromatographie à haute pression (7) est de type SFC (chromatographie en phase supercritique).

2. Dispositif selon la revendication 1, **caractérisé en ce que** ladite enveloppe (2) et lesdits moyens de communication (5) sont aptes à résister mécaniquement à une pression fluidique supérieure ou égale à 100 bars.

3. Dispositif selon l'une des revendications précédentes, **caractérisé en ce que** l'enveloppe (2) et/ou les moyens de communication (5) sont dans un matériau choisi parmi le PEEK ou l'acier inoxydable.

4. Dispositif selon l'une des revendications précédentes, **caractérisé en ce que** ladite phase stationnaire solide est de type phase inverse.

5. Dispositif selon l'une des revendications précédentes, **caractérisé en ce que** ladite chambre (4) a un volume compris entre 50 et 2000 mm³.

6. Procédé de pré-purification et d'injection dans un système de chromatographie à haute pression (7) d'un échantillon liquide comprenant des composés radiomarqués, utilisant un dispositif selon l'une des revendications 1 à 5.

7. Procédé selon la revendication précédente, ledit procédé comprenant, dans l'ordre :
(i) une étape de chargement comprenant :
- l'alimentation au travers d'une vanne multivoies (8) en position de chargement (13) de ladite cartouche (1) avec un échantillon liquide comprenant des composés radiomarqués,
- la rétention des composés radiomarqués par la cartouche (1),
- l'évacuation d'éléments non-retenus (14) par ladite cartouche (1) vers un moyen d'évacuation (11) au travers de la vanne multivoies (8) ; et
(ii) une étape d'injection comprenant :
- l'aspiration par une pompe (10) d'une phase d'élution (15) au travers de la vanne multivoies (8) en position d'injection (16) vers ladite cartouche (1),
- la libération des composés radiomarqués retenus par la cartouche (1),
- l'introduction de la phase d'élution comprenant les composés radiomarqués (17) dans un système de chromatographie à haute pression (7) au travers de la vanne multivoies (8) ;
**caractérisé en ce que** ledit système de chromatographie à haute pression (7) est de type SFC (chromatographie en phase supercritique).

8. Procédé selon la revendication précédente, **caractérisé en ce que** la phase d'élution (15) est de l'éthanol.

9. Procédé selon l'une des revendications 7 et 8, **caractérisé en ce qu'**il comprend, après ladite étape d'injection, une étape de régénération de ladite cartouche (1) comprenant, dans l'ordre :
- l'alimentation au travers d'une vanne multivoies (8) en position de chargement (13) de la cartouche (1) avec une phase de régénération, et
- l'évacuation de ladite phase vers un moyen d'évacuation (11) au travers de la vanne multivoies (8).

10. Procédé selon la revendication précédente, **caractérisé en ce que** la phase de régénération est choisie parmi l'eau, les tampons aqueux et les solvants organiques.

## Patentansprüche

1. Vorrichtung zur Vorreinigung und Injektion (6) einer flüssigen Probe, die radioaktiv markierte Verbindungen umfasst, in ein Hochdruckchromatographiesystem (7), wobei die Vorrichtung umfasst:
- ein Mehrwegeventil (8),
- ein Zuführmittel (9) für eine flüssige Probe, die radioaktiv markierte Verbindungen umfasst,
- eine Pumpe (10) für eine Elutionsphase,
- eine Kartusche, welche umfasst eine
∘ Hülle (2),
∘ Filtermittel (3),
∘ eine Kammer (4), deren Volumen durch die Hülle (2) und die Filtermittel (3) begrenzt ist, wobei die Kammer eine stationäre Festphase umfasst, und
∘ Mittel zur strömungstechnischen Kommunikation (5) stromauf- und stromabwärts der Kammer (3) und der Filtermittel (3),
wobei die Hülle (2) und die Mittel zur strömungstechnischen Kommunikation (5) in der Lage sind, einem Fluiddruck von größer oder gleich 50 bar mechanisch standzuhalten,
- ein Ausleitmittel (11),
wobei das Ventil mit dem Zuführmittel (9), der Pumpe (10), der Kartusche (1), dem Ausleitmittel (11) und einem Hochdruckchromatographiesystem (7) in strömungstechnischer Kommunikation (12) steht;
**dadurch gekennzeichnet, dass** das Hochdruckchromatographiesystem (7) vom Typ SFC (Superkritische Fluidchromatographie) ist.

2. Vorrichtung nach Anspruch 1, **dadurch gekennzeichnet, dass** die Hülle (2) und die Kommunikationsmittel (5) in der Lage sind, einem Fluiddruck von größer oder gleich 100 bar mechanisch standzuhalten.

3. Vorrichtung nach einem der vorstehenden Ansprüche, **dadurch gekennzeichnet, dass** die Hülle (2) und/oder die Kommunikationsmittel (5) aus einem Material bestehen, ausgewählt aus PEEK oder Edelstahl.

4. Vorrichtung nach einem der vorstehenden Ansprüche, **dadurch gekennzeichnet, dass** die stationäre Festphase vom Typ einer Umkehrphase ist.

5. Vorrichtung nach einem der vorstehenden Ansprüche, **dadurch gekennzeichnet, dass** die Kammer (4) ein Volumen zwischen 50 und 2000 mm³ aufweist.

6. Verfahren zur Vorreinigung und Injektion einer flüssigen Probe, die radioaktiv markierte Verbindungen umfasst, in ein Hochdruckchromatographiesystem (7) unter Verwendung einer Vorrichtung nach einem der Ansprüche 1 bis 5.

7. Verfahren nach dem vorstehenden Anspruch, wobei das Verfahren der Reihe nach umfasst:
(i) einen Ladeschritt, welcher umfasst:
- Zuführen einer flüssigen Probe, die radioaktiv markierte Verbindungen umfasst, durch ein in Ladestellung (13) befindliches Mehrwegeventil (8) zu der Kartusche (1),
- Zurückhalten der radioaktiv markierten Verbindungen durch die Kartusche (1),
- Ausleiten von nicht von der Kartusche (1) zurückgehaltenen Elementen (14) durch das Mehrwegeventil (8) zu einem Ausleitmittel (11); und
(ii) einen Injektionsschritt, welcher umfasst:
- Ansaugen einer Elutionsphase (15) durch eine Pumpe (10) durch das in Injektionsstellung (16) befindliche Mehrwegeventil (8) zu der Kartusche (1),
- Freisetzen der von der Kartusche (1) zurückgehaltenen radioaktiv markierten Verbindungen,
- Einleiten der Elutionsphase, die die radioaktiv markierten Verbindungen (17) umfasst, durch das Mehrwegeventil (8) in ein Hochdruckchromatographiesystem (7);
**dadurch gekennzeichnet, dass** das Hochdruckchromatographiesystem (7) vom Typ SFC (Superkritische Fluidchromatographie) ist.

8. Verfahren nach dem vorstehenden Anspruch, **dadurch gekennzeichnet, dass** es sich bei der Elutionsphase (15) um Ethanol handelt.

9. Verfahren nach einem der Ansprüche 7 und 8, **dadurch gekennzeichnet, dass** es nach dem Injektionsschritt einen Schritt zum Regenerieren der Kartusche (1) umfasst, welcher der Reihe nach umfasst:
- Zuführen einer Regenerierungsphase durch ein in Ladestellung (13) befindliches Mehrwegeventil (8) zu der Kartusche (1), und
- Ausleiten der Phase durch das Mehrwegeventil (8) zu einem Ausleitmittel (11).

10. Verfahren nach dem vorstehenden Anspruch, **dadurch gekennzeichnet, dass** die Regenerierungsphase ausgewählt ist aus Wasser, wässrigen Puffern und organischen Lösungsmitteln.

## Claims

1. A device for pre-purifying and injecting (6) in a high-pressure chromatography system (7) a liquid sample comprising radiolabelled compounds, said device comprising:
- a multi-way valve (8)
- means (9) for supplying a liquid sample comprising radiolabelled compounds,
- a pump (10) for an elution phase,
- a cartridge comprising an
∘ envelope (2),
∘ filtration means (3),
∘ a chamber (4) whose volume is delimited by said envelope (2) and said filtration means (3), said chamber comprising a solid stationary phase, and
∘ fluid communication means (5) upstream and downstream of said chamber (3) and said filtration means (3),
said envelope (2) and said fluid communication means (5) being capable of mechanically withstanding a fluid pressure greater than or equal to 50 bar,
- a discharge means (11),
said valve being in fluid communication (12) with the supply means (9), the pump (10), the cartridge (1), the evacuation means (11) and a high-pressure chromatography system (7);
**characterised in that** said high-pressure chromatography system (7) is of the SPC (supercritical phase chromatography) type.

2. The device according to claim 1, **characterised in that** said envelope (2) and said communication means (5) are capable of mechanically withstanding a fluid pressure greater than or equal to 100 bar.

3. The device according to one of the preceding claims, **characterised in that** the envelope (2) and/or the communication means (5) are of a material chosen from PEEK or stainless steel.

4. The device according to one of the preceding claims, **characterised in that** said solid stationary phase is of the reverse phase type.

5. The device according to one of the preceding claims, **characterised in that** said chamber (4) has a volume between 50 and 2000 mm³.

6. A method for pre-purifying and injecting into a high-pressure chromatography system (7) a liquid sample comprising radiolabelled compounds, using a device according to one of claims 1 to 5.

7. The method according to the preceding claim, said method comprising, in order:
(i) a loading step comprising:
- supplying through a multi-way valve (8) in a loading position (13) of said cartridge (1) with a liquid sample comprising radiolabelled compounds,
- retaining the radiolabelled compounds with the cartridge (1),
- discharging unretained elements (14) by said cartridge (1) to a discharge means (11) through the multi-way valve (8); and
(ii) an injection step comprising:
- sucking by a pump (10) an elution phase (15) through the multi-way valve (8) in the injection position (16) to said cartridge (1),
- releasing the radiolabelled compounds retained by the cartridge (1),
- introducing the elution phase comprising the radiolabelled compounds (17) into a high-pressure chromatography system (7) through the multi-way valve (8);
**characterised in that** said high-pressure chromatography system (7) is of the SPC (supercritical phase chromatography) type.

8. The method according to the preceding claim, **characterised in that** the elution phase (15) is ethanol.

9. The method according to one of claims 7 and 8, **characterised in that** it comprises, after said injection step, a step of regenerating said cartridge (1) comprising, in order:
- supplying through a multi-way valve (8) in the loading position (13) of the cartridge (1) with a regeneration phase, and
- discharging said phase to a discharge means (11) through the multi-way valve (8).

10. The method according to the preceding claim, **characterised in that** the regeneration phase is chosen from water, aqueous buffers and organic solvents.
